# EUROPEAN PATENT SPECIFICATION

(11) **EP 1 181 446 B1**
(45) Date of publication and mention of the grant of the patent: **27.07.2005**
(21) Application number: 00937444.8
(22) Date of filing: 25.05.2000
(51) Int. Cl.: F02M 65/00, F02B 77/08, G01M 15/00

(54) **METHOD AND ARRANGEMENT FOR SENSOR DIAGNOSIS**
VERFAHREN UND VORRICHTUNG FÜR EINE FÜHLERPRÜFUNG
METHODE ET DISPOSITIF DE DIAGNOSTIC POUR CAPTEUR

(30) Priority: 01.06.1999 SE 9902009
(43) Date of publication of application: 27.02.2002
(73) Proprietor: Volvo Personvagnar AB, 405 31 Göteborg (SE)
(72) Inventor: MÜLLER, Jan, S-423 70 Säve (SE); MÖLLER, Peter, S-431 68 Mölndal (SE)
(74) Representative: Andersson, Per Rune
(86) International application number: PCT/SE2000/001056
(87) International publication number: WO 2001/002720

(56) References cited:
- FR-A1- 2 541 456
- US-A- 4 546 647
- US-A- 4 960 087
- PATENT ABSTRACTS OF JAPAN & JP 63 143 383 A (TOYOTA MOTOR CORP) 15 June 1988

## Description

### TECHNICAL FIELD

The present invention relates to a method for sensor diagnosis, according to the preamble of the accompanying claim 1. In particular, the invention is intended for use when diagnosing a pressure sensor that in turn is arranged for detection of the pressure of fuel fed to a combustion engine in an automotive vehicle. The invention also relates to an arrangement for the realisation of said method, according to the preamble of the accompanying claim 7.

### BACKGROUND ART

In connection with vehicles driven by a combustion engine, for example a passenger car, a fuel pump is utilised for feeding the fuel to the engine. According to conventional techniques, the fuel pump is then arranged in connection with the vehicle fuel tank and functioning to feed fuel from the tank at a sufficient flow rate and a suitable fuel pressure. In this manner, the required fuel supply to the engine can be provided during the different operating states of the engine.

The fuel pumps used with conventional, port-injected petrol engines (i.e. engines with injection devices arranged in the intake passages of each engine cylinder), are intended to maintain a fuel pressure of about 0.3 - 0.4 MPa.

In connection with a so-called DI engine, i.e. a direct-injected Otto type engine, each combustion chamber of the engine is arranged in such a way that the fuel supplied can be highly concentrated around the spark plug in connection with combustion of the fuel. This mode is commonly referred to as "stratified" operation and allows, during continuous running at for example low or medium torque and speed of the engine, operation with a very lean air/fuel mixture, more particularly with a Lambda value (λ) up to and above about λ=3. In this way, a reduction of the fuel consumption of this type of engine will be achieved. The DI engine can also be operated in a "homogeneous" operating mode, with a substantially stoicheiometric mixture (λ=1-1.2) or a relatively rich mixture (λ<1). This latter operating mode normally exists in driving situations with relatively high torque and high speed of the engine.

Due to the functional mode of a DI engine, whereby fuel is injected during a very short period of time (in connection with stratified operation) compared to conventional port-injected engines, a substantially higher fuel pressure is required for DI engines than for conventional engines. Therefore, according to the known technique with a Di engine, both a conventional fuel pump, arranged by the tank and operative to feed fuel at a pressure of 0.3-0.4 MPa, and a high-pressure pump, for feeding the fuel to electrically controlled injecting devices, injectors, at each cylinder, are used. The high-pressure pump is thereby set to operate at a pressure of about 5-15 MPa. Thus, the fuel pressure can be varied as a function of the load, speed and operating range of the engine in question.

For controlling the pressure of the fuel supplied to each injector, a pressure sensor is used for detecting the current fuel pressure. In this connection there is furthermore a requirement for being able to perform a diagnosis of this pressure sensor, to be able to provide, in this manner, an indication regarding any malfunction of the sensor. Such a diagnosis could comprise a plausibility assessment, whereby a control unit is used for controlling if the measured data supplied by the pressure sensor are higher than a highest possible value or lower than a lowest possible value (so-called "out-of-range" diagnosis). If this is the case, the sensor can be judged to be defective.

Although in principle this type of diagnosis is reliable, it entails a problem because it will not allow any possibility of checking if the pressure sensor is defective in those cases where the currently measured data actually lie within the expected range, i.e. when the measured data lie between the highest possible value and the lowest possible value.

### DISCLOSURE OF INVENTION

The object of the present invention is to provide an improved method for diagnosis of a fuel pressure sensor in an automotive vehicle, said method particularly providing an improved reliability compared to known diagnosis methods. This is achieved by a method, the characteristics of which are defined by the accompanying claim 1. This is also achieved by means of an arrangement, the characteristics of which are defined by the accompanying claim 7.

The invention defines a method for the diagnosis of a sensor in connection with control of a combustion engine, whereby the control comprises feeding fuel under pressure to the engine, detecting said pressure by means of said sensor, and controlling an air/fuel mixture, adapted according to the operating state of the engine. According to the invention, an intentional modification of said pressure, and an intentional modification of the injection time period, during which fuel is fed to the engine, is performed. Said modifications of the pressure and the injection time period, respectively, are selected in such a way that substantially no change of the fuel flow to the engine is obtained. According to the invention, a check is performed, with respect to if said modifications of the pressure and the injection time period, respectively, entail any unallowable deviation in the operating state of the engine, and, if this is the case, an indication that the sensor is defective is issued.

Thanks to the invention, a substantial advantage is achieved in relation to conventional systems because it allows a plausibility test, enabling any deficiencies in the sensor to be detected even though its current measured data lie within an expected, "normal", measurement range. This provides a high reliability of the diagnosis method according to the invention.

Advantageous embodiments of the invention are described in the subsequent, dependent claims.

### DESCRIPTION OF DRAWINGS

The invention will be described below in connection with a preferred embodiment and the enclosed drawings, in which:
- Fig. 1: shows, in the form of a block diagram, an arrangement for a combustion engine, by which the present invention can be utilised, and
- Fig. 2: shows a simplified flow diagram, illustrating the function of the invention.

### PREFERRED EMBODIMENT

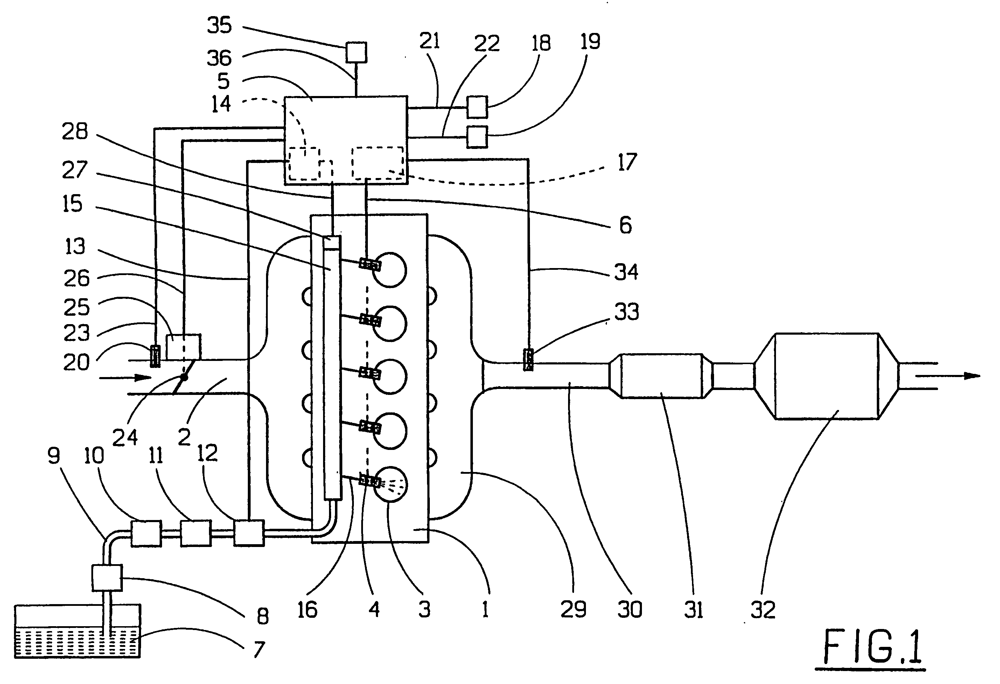

Fig. 1 shows, in the form of a block diagram, an arrangement for a combustion engine 1, with which the present invention can be utilised. According to a preferred embodiment, the invention is used for an engine of the so-called DI type, i.e. a direct-injected Otto type engine. The invention is however not delimited to this type of engine, but could be used also for other types of engine such as conventional petrol engines and Diesel engines.

According to the embodiment, the engine 1 is operable in at least two operating modes with different air and fuel supplies to the engine 1, and different timings for fuel injection and for ignition of the air/fuel mixture. A first operating mode could then consist of a "stratified" operating mode, wherein the supplied fuel is concentrated in the respective combustion chambers of the engine, allowing, during certain operating conditions (primarily at relatively low speed and torque), operation with a very lean air/fuel mixture, in the order of up to about λ=3. The stratified operating mode is based upon fuel being injected into the engine 1 so as to be mixed partially (i.e. non-homogeneously) with air. In this way, ignition of a very lean mixture can be achieved. With such an engine, a reduction of the fuel consumption is achieved compared to engines operated with a stoicheiometric mixture, that is where λ=1. Further, the engine 1 can, alternatively, be set to a "homogeneous" operating mode during certain operating conditions with relatively high torque and speed of the engine 1, whereby a stoicheiometric or rather rich mixture is fed to the engine 1. This mixture will thereby - contrary to what applies during the stratified operating mode - be substantially evenly distributed inside the combustion chamber.

The control unit 5 is operative to change between the different possible operating modes of the engine 1, in dependence of e.g. driving conditions, load and rotational speed. In the following, an embodiment of the invention will be described, whereby the engine 1 is supposed to be operated either stratified or homogeneously. The invention is however not delimited to only these two operating modes.

The engine 1 is fed with in-flowing air via an air inlet 2. The engine 1 is further provided with a number of cylinders 3 and a corresponding number of injecting devices in the form of electrically controlled injectors 4 for injection of fuel into each individual cylinder 3. Each injector 4 is connected to a central control unit 5 through an electrical connection 6. The control unit 5 is preferably computer based and arranged to control, in a known manner, the fuel supply to the individual injector 4, using fuel from a fuel tank 7 so that, in each instant, an appropriately adapted air/fuel mixture is fed to the engine 1.

The engine 1 according to the embodiment is designed according to the "multi-point" injection type, wherein the appropriate amount of fuel to the engine 1, in a known manner, can be supplied individually to each cylinder 3. The engine 1 further has five cylinders. It should, however, be noted that the invention is not limited to this embodiment, but can be used also for engines with other numbers of cylinders and cylinder configurations. Furthermore, the invention could alternatively be utilised with engines equipped with so-called "single point" injection, i.e. where fuel and air is fed to all the cylinders through a common inlet.

Fuel is supplied to the engine 1 from the tank 7 by means of a first fuel pump 8, functioning as a feeder pump, working at a relatively low pressure, in the order of 0.3 - 0.4 MPa. The fuel is fed from the fuel pump 8, through a fuel line 9, via a fuel filter 10 and a pulsation equalizer 11 and then to a second pump in the form of a high-pressure pump 12. The fuel filter 10, the pulsation equalizer 11 and the high-pressure pump 12 are as such previously known devices and therefore will not be described in detail here.

Due to the specific working mode of the DI engine, especially as the fuel is injected into the respective cylinders during very short periods of time, the high-pressure pump 12 is functioning to generate a relatively high fuel pressure, in the order of 5-15 MPa. To this end, the high-pressure pump 12 is connected via the connection 13 to an electronic drive unit 14, preferably included as an integrated part of the control unit 5. By means of the drive unit 14, the fuel pressure is adapted to the current operating state of the engine 1.

The fuel is metered out from the high-pressure pump 12 and on to a fuel distributing device consisting of a fuel distribution pipe 15. The fuel distribution pipe 15 is in turn arranged adjacent to the engine 1 and connected to the individual injectors 4 via fuel lines 16. However, the invention is not delimited to this embodiment, but could also be applied to fuel distribution pipes being integral with each injector, i.e. not comprising any separate attachments connecting the fuel distribution pipe with the individual injector.

During operation of the engine 1, the control unit 5 is generally operative to control the air/fuel mixture to the engine 1 so as to adapt it in each instant to the current operating conditions. The control of the engine 1 is performed in a substantially known manner, in dependence of various parameters reflecting the operating conditions of the engine 1 and the vehicle in question. For example, the engine control could be performed in dependence of the current throttle position, the engine speed, the amount of air fed to the engine and the oxygen concentration of the exhaust gases. To this end, the engine 1 is provided with, for example, a position sensor 18 for the vehicle throttle pedal (not shown), a revolution counter 19 for detection of the speed of the engine 1, and an air flow meter 20 for detection of the amount of air fed into the engine 1, all being connected to the control unit 5 via corresponding electrical connections, 21, 22 and 23, respectively.

The system further comprises a throttle 24, preferably electrically controlled and to this end provided with a controllable actuation motor 25, by the aid of which the throttle 24 can be set to a certain required position, allowing an appropriate amount of air to be fed into the engine 1 depending on the current operating conditions. The actuation motor 25 is thus connected to the control unit 5 by a further connection 26.

The fuel is metered out from each injector 4 at appropriate points in time (in turn depending on for example the current operating conditions) through control from an injection drive unit 17, included in the control unit 5, and connected to each injector 4 via the connection 6. In this way, the injection drive unit 17 is functioning to supply fuel to the respective injector 4 during a certain injection time period, tᵢₙⱼ.

For control of the fuel pressure, the high-pressure pump 12 is controllable via the drive unit 14 discussed above. To this end, there is also a sensor 27, for detection of the current fuel pressure p, arranged in connection with the fuel distribution pipe 15. The fuel pressure sensor 27 is to this end connected to the control unit 5 via a further connection 28. In this way, the fuel pressure sensor 27 delivers a measurement value corresponding to the current pressure p in the fuel distribution pipe 15.

According to what is shown in Fig. 1, the sensor 27 is arranged in direct connection to the fuel distribution pipe 15. In principle, however, the sensor 27 could be arranged anywhere downstream of the high-pressure pump 12, as the fuel pressure is essentially the same at all points downstream of the high-pressure pump 12.

During operation of the engine 1, its exhaust gases are conveyed out of the cylinders 3 via an exhaust manifold 29 and on further into an exhaust pipe 30, connected to the exhaust manifold 29. Further downstream along the exhaust pipe 30, an exhaust gas catalytic converter 31 is preferably provided. The catalytic converter 31 is of a known kind and will not be described in detail here. The exhaust gases from the engine 1 thus flow through the exhaust pipe 30, through the catalytic converter 31 and then on out to the atmosphere, preferably via an as such known silencer 32.

The arrangement according to the invention further comprises a sensor 33 for detection of the oxygen concentration in the exhaust gases. The sensor 33 is preferably of the linear Lambda sonde type (but could alternatively be a binary sonde), and is connected to the control unit 5 via an electrical connection 34. The sensor 33 is located in the exhaust pipe 30, upstream of the exhaust catalytic converter 31 and the silencer 32. In a manner as such known, the sensor 33 is used for generating a signal corresponding to the oxygen concentration in the exhaust gases. This signal is input to the control unit 5 via the connection 34, and is used in controlling the air/fuel mixture to the engine 1.

The function of the invention will now be described in detail. The engine 1 is in the known manner arranged, at relatively low torque and low speed, to be operated in a stratified mode, with a very lean air/fuel mixture. The engine 1 is also arranged, at relatively high torque and high speed, to be operated in a homogeneous mode, i.e. with a stoicheiometric or substantially stoicheiometric mixture. Based on the current rotational speed of the engine 1, which is determined by means of the speed sensor 19, and the required torque of the engine 1, which can be detected by means of the position sensor 18 for the throttle pedal position, the control unit 5 is able to determine if the engine 1 is to be set to the stratified or the homogeneous operating mode. Furthermore, the control unit 5 is thereby functioning to determine an appropriate amount of air and fuel to be fed to the engine 1 in a certain driving situation.

The control unit 5 is utilised for adjusting the high-pressure pump 12 to a suitable pressure. For this adjustment, a detection is performed of the current fuel pressure p in the fuel distribution pipe 15, which is done by means of the fuel pressure sensor 27 discussed above. Further, according to what has been mentioned initially, there is a need for performing a diagnosis of the sensor 27, whereby a determination can be made if it is functioning properly or not.

The invention is based upon performing a predetermined, intentional modification of the fuel pressure p and, simultaneously, performing a predetermined, intentional modification of the injection time period tᵢₙⱼ. The changes in the pressure and the injection time period, respectively, are thereby selected in such a way that the fuel flow to the engine will remain substantially unchanged. During normal conditions, no modification of the control of the air/fuel mixture to the engine 1 will thus be necessary (that is, assuming that the sensor 27 is functioning properly). In other words, the invention is based upon a checking of, if the changes in the pressure and the injection time, respectively, motivate any necessary modification of the control of the air/fuel mixture to the engine 1, or not.

A certain modification of the current fuel pressure p, corresponds to a change in the amount of injected fuel F, which is defined by the following relationship between the fuel amount F and the pressure p:$\text{F} \text{=} {\text{t}}_{\text{inj}} \text{·} \text{K} \text{·} \text{E} \text{·} \text{C} \text{·} \sqrt{\text{p}}$ where tᵢₙⱼ is the injection time period for the individual injector, K is a constant corresponding to a measure of, among other things, the size of the injector, E is a constant error factor determined in dependence of the current temperature and control voltage to the injector in question, and C is a constant error factor determined in dependence of component variations. The term p, which defines a measure of the current pressure, is really composed of the difference between the pressure applied onto the respective injector, minus the pressure on the outlet side of the injector in question, i.e. √(p-pᵤ). The outlet pressure pᵤ may, however, in this context, be considered as constant and relatively low compared to the pressure applied onto the respective injector. For this reason, the term √(p-pᵤ) can be approximated by the term √p.

In those cases where the outlet pressure pᵤ cannot be regarded as negligible, it can be calculated, based upon known values corresponding to the amount of air fed into the engine 1 (obtained from the air flow meter 20) or corresponding to the speed of the engine 1 (obtained from the revolution counter 19).

The terms K, E, C, can be regarded as constants that are not changed during the diagnosis procedure according to the invention. All in all, it will thus apply that if the current fuel pressure p is changed, then this will correspond to a known change of the injected amount of fuel F, the injected amount of fuel F being substantially proportional to √p.

The invention is thus based on a certain modification of the fuel pressure p causing a certain change of the injected amount of fuel F. This change in the amount of fuel will, according to the invention, be compensated by a corresponding modification of the injection time period tᵢₙⱼ, whereupon a check will be performed that no change is necessary in the control of air and fuel to the engine in order to maintain a current, expected Lambda value. If a deviation from the expected Lambda value is determined, an indication may be issued, e.g. in the form of an activated warning light 35. Such a warning light 35 would then be connected to the control unit 5 via a further connection 36, and would preferably be located in, or in connection with, the instrument panel of the vehicle in question.

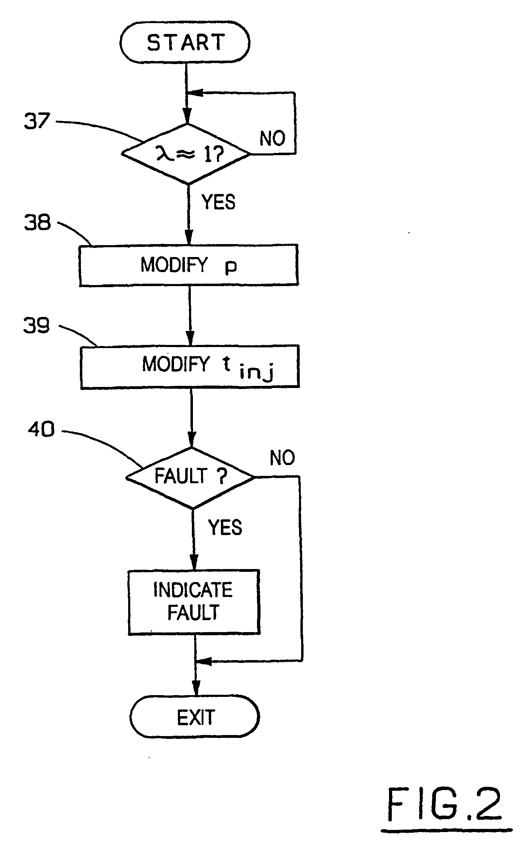

The function of the invention will now be explained in detail, with reference to Fig. 2, which is a simplified flow diagram from which the function of the invention may be gathered. According to the embodiment, the diagnosis method according to the invention can be initiated when the engine is operated at an air/fuel mixture having a Lambda value in the order of λ=1. This follows from the fact that the Lambda sensor 33 is designed for use at Lambda values of this magnitude. For this reason, the diagnosis according to the invention normally cannot be performed during stratified operation of the engine, as the engine is then fed with an air/fuel mixture having a Lambda value substantially above λ=1.

The exact range of Lambda values within which the invention can be utilised will vary depending on, among other things, the type of Lambda sensor 33 being used. In normal applications, the method according to the invention can be performed at about 0.85 < λ < 1.15.

As an initial step of the method according to the invention (compare square 37 in Fig. 2), it is thus first checked that the engine is operated in a suitable operating mode, wherein the Lambda value, for the reasons discussed above, must lie within a predetermined range in the order of λ=1. As the engine 1 according to the embodiment is a DI engine, this required operating mode corresponds to the engine 1 being operated homogeneously. If this is the case, the measurement signal from the Lambda sensor 33 can be used for a closed-loop Lambda control, i.e. a control of the air/fuel mixture fed to the engine 1.

Further, the diagnosis according to the invention would best include complementary steps aiming at checking if a certain operating state is present, e.g. if the current speed and load of the engine are within ranges suitable for realisation of the diagnosis. Furthermore, the diagnosis might comprise steps aiming at checking if the control of the air/fuel mixture to the engine has built up to a stable situation, for example if the Lambda sensor 33 during a certain time period has delivered a substantially constant measurement value. Such checking steps could be utilised for securing that the diagnosis is performed at suitable points in time.

The next step in the diagnosis procedure is that a predetermined pressure modification is performed (square 38) in accordance with what has been explained above, that is, the fuel pressure p is altered to a certain degree through control of the high-pressure pump 12 by means of the control unit 5. For example, the modification of the pressure p could be done in the form of an increase (or a decrease) of 10, 20 or 30 %, but the invention is of course not limited only to this kind of pressure modifications. Hereby, the pressure sensor 27 is used for determining that the required modification of the pressure p has been achieved. At the same time as the pressure change is made, according to the invention, a corresponding modification of the injection time period tᵢₙⱼ for the respective injector is also performed (square 39). According to what was explained above, the modification of the injection time period is made with the intention of compensating for the effect upon the injected fuel amount F that follows from the change in the pressure p.

If the function of the fuel pressure sensor 27 is intact, the amount of fuel F will remain substantially constant after the modifications of the pressure p and the injection time period tᵢₙⱼ. Consequently, no change in the Lambda control of the engine 1 would then be expected as a consequence of the two intentional disturbances. In order to determine if this is the case, according to the invention, a check will be made (square 40) if the simultaneous modifications of the fuel pressure p and of the injection time period tᵢₙⱼ has entailed any necessary change in the Lambda control of the fuel/air mixture to the engine 1. This control normally comprises a factor with relatively short response time, in the order of a second or two. If this "quick" control factor does not change (i.e. if no compensation of the air/fuel control has been performed by means of the control unit 5), the sensor 27 can be regarded as intact. If this is the case, the diagnostic procedure is terminated.

If, instead, a deviation should be detected, i.e. if a modification of the Lambda control has been found necessary, then this is an indication of the sensor 27 being defective. In this case, a warning signal is issued (square 41) by means of the warning light 35 mentioned above. In this way, an indication is provided to the vehicle operator that the sensor 27 is defective.

The diagnosis method according to the invention is preferably performed at discrete points in time, primarily as a DI engine only operates with the Lambda control described above on certain occasions (e.g. during homogeneous operation). The intentional modification of the pressure p and the injection time period is then maintained for a few seconds, which is sufficient time for the Lambda control to build up to stable values.

As a complement to the diagnostic procedure described above, an "out of range" test could also be performed in the control unit 5. This means that the signal from the pressure sensor 27 is continuously compared with a highest conceivable measurement value and a lowest conceivable measurement value. If the signal from the pressure sensor 27 lies outside of this expected range, this will also be an indication of the pressure sensor 27 being defective.

The invention will not be limited to the embodiment discussed above, but can be varied within the scope of the accompanying claims. For example, the invention is not limited to engines if the DI type, but can also be used with other types of engine, such as conventional petrol engines and Diesel engines, that is, various types of fuel-powered engines having a requirement for performing a diagnosis of a fuel pressure sensor in connection with a Lambda control. Further, the invention can be utilised with various types of vehicles, e.g. passenger cars, trucks and buses.

According to an alternative embodiment, a measured signal pertaining to the torque of the engine could further be used as reference, instead of the current Lambda value. In such a case it could be checked if a deviation of the engine torque occurs in connection with the change in the fuel pressure and the injection time period, i.e. if an excessive torque change occurs after having performed said modifications of the fuel pressure and the injection time period. Such a change in the operating state of the engine would then be an indication of the fuel pressure sensor being defective.

The diagnosis method according to the invention could alternatively be used with fuel pumps working at a relatively low pressure, i.e. as an alternative to the high-pressure pumps used with DI engines.

In principle, the invention could furthermore be used with engines comprising one high-pressure pump for each cylinder, instead of with the embodiment discussed above comprising a common high-pressure pump for all the cylinders.

Further, the invention can be used with engines based upon equally large fuel supply to all cylinders (like the embodiment described above) or, alternatively, with engines provided with individual control of the fuel supply to each cylinder.

## Claims

1. A method for the diagnosis of a sensor (27) in connection with control of a combustion engine (1), whereby the control comprises:
feeding fuel under pressure (p) to the engine (1),
detecting said pressure (p) by means of said sensor (27), and
controlling an air/fuel mixture, adapted according to the operating state of the engine (1),
**characterised by** said method comprising the steps of:
performing an intentional modification of said pressure (p),
performing an intentional modification of the injection time period (tᵢₙⱼ), during which fuel is fed to the engine (1), said modifications of the pressure (p) and the injection time period (tᵢₙⱼ), respectively, being selected in such a way that substantially no change of the fuel flow (F) to the engine (1) is obtained, and
performing a check with respect to if said modification of the pressure (p) and the injection time period (tᵢₙⱼ), respectively, entail any unallowable deviation in the operating state of the engine (1), and, if this is the case,
issuing an indication that the sensor (27) is defective.

2. The method according to claim 1, **characterised by** said check comprising a determination of if said modification of the pressure (p) and the injection time period (tᵢₙⱼ), respectively, entail any unallowable deviation in said control of the air/fuel mixture fed to the engine (1).

3. The method according to claims 1 or 2, **characterised by** comprising a check if the signal from the sensor (27) lies within a range delimited by a highest conceivable measurement value and a lowest conceivable measurement value, any signal lying outside of said range being used for said indication that the sensor (27) is defective.

4. A method according to any one of the preceding claims, **characterised by** comprising a check if a suitable operating mode of the engine (1) exists before performing said intentional modification of the pressure (p) and the injection time period (tᵢₙⱼ), respectively.

5. The method according to claim 4, **characterised by** comprising a check if the Lambda value regarding the oxygen content of the exhausts from the engine (1) is in the order of λ=1 before performing said intentional modification of the pressure (p) and the injection time period (tᵢₙⱼ), respectively.

6. A method according to any one of the preceding claims, **characterised by** said indication consisting of the actuation of a warning light (35) or similar.

7. An arrangement for the diagnosis of a sensor (27) in connection with control of a combustion engine (1), comprising a pump (8; 12) for feeding of fuel under pressure (p) to the engine (1) and control means (5, 6, 14, 17, 24, 25) for controlling an air/fuel mixture adapted in accordance with the operating state of the engine (1), **characterised by** said control means (5, 6, 14, 17, 24, 25) being operative to perform an intentional modification of said pressure (p), and an intentional modification of the injection time period (tᵢₙⱼ), during which fuel is fed to the engine (1), said modifications of the pressure (p) and the injection time period (tᵢₙⱼ), respectively, being selected in such a way that substantially no change of the fuel flow (F) to the engine (1) is obtained, and by said control means (5, 6, 14, 17, 24, 25) being operative to check if said modification of the pressure (p) and the injection time period (tᵢₙⱼ), respectively, entail any unallowable deviation in the operating state of the engine (1), and, if this is the case, to issue an indication that the sensor (27) is defective.

8. The arrangement according to claim 7, **characterised by** said engine (1) being a direct injection Otto type engine.

9. An arrangement according to claims 7 or 8, **characterised by** said pump (8; 12) comprising a high-pressure pump (12) for feeding the fuel to said engine (1), said sensor (27) being arranged downstream of the high-pressure pump (12).

10. A vehicle, comprising an arrangement according to any one of the claims 7 - 9.

## Patentansprüche

1. Verfahren zur Diagnose eines Sensors (27) im Zusammenhang mit der Regelung eines Verbrennungsmotors (1), wobei zu der Regelung gehören:
Zuführen von Kraftstoff unter Druck (p) zu dem Motor (1),
Ermitteln des Drucks (p) mittels des Sensors (27) und
Regeln eines Luft/Kraftstoff-Gemischs, das entsprechend dem Betriebszustand in dem Motor angepasst ist,
**dadurch gekennzeichnet, dass** zu dem Verfahren folgende Schritte gehören:
Durchführen einer absichtlichen Modifikation des Druckes (p),
Durchführen einer absichtlichen Modifikation der Einspritzdauer (tᵢₙⱼ), während der Kraftstoff des Motors (1) zugeführt wird, wobei die Modifikationen des Drucks (p) und der Einspritzzeitdauer (tᵢₙⱼ) jeweils derart ausgewählt werden, dass im wesentlichen keine Änderung des Kraftstoff-Flusses (F) zu dem Motor (1) erreicht wird, und
Durchführen einer Prüfung dahingehend, ob die jeweilige Modifikation des Druckes (p) und der Einspritzzeitdauer (tᵢₙⱼ) irgendeine unerlaubte Abweichung bei dem Betriebszustand des Motors (1) nach sich ziehen, und, falls dies der Fall ist, Ausgabe einer Anzeige, dass der Sensor (27) defekt ist.

2. Verfahren nach Anspruch 1, **dadurch gekennzeichnet, dass** die Prüfung eine Bestimmung dahingehend aufweist, dass die Modifikation des Druckes (p) und der Einspritzzeitdauer (tᵢₙⱼ) jeweils zu irgendeiner unerlaubten Abweichung bei der Regelung des Luft/Kraftstoff-Gemischs führt, das der Maschine (1) zugeführt wird.

3. Verfahren nach Anspruch 1 oder 2, **dadurch gekennzeichnet, dass** eine Prüfung dahingehend vorgenommen wird, ob das Signal von dem Sensor (27) in einem Bereich liegt, der durch einen höchsten vorstellbaren Messwert und einen niedrigsten vorstellbaren Messwert begrenzt ist, wobei jedes außerhalb des Bereiches liegende Signal zur Anzeige, dass der Sensor (27) defekt ist, verwendet wird.

4. Verfahren nach einem der vorangehenden Ansprüche, **dadurch gekennzeichnet, dass** eine Prüfung vorgesehen ist, ob ein passender Betriebsmodus des Motors (1) existiert, ehe die absichtliche Modifikation des Druckes (p) und der Einspritzzeitdauer (tᵢₙⱼ) jeweils durchgeführt werden.

5. Verfahren nach Anspruch 4, **dadurch gekennzeichnet, dass** eine Prüfung vorgenommen wird, ob der Lambda-Wert hinsichtlich des Sauerstoffgehalts des Abgases von dem Motor (1) in der Größenordnung von λ=1 ist, ehe die absichtliche Modifikation des Drucks (p) und der Einspritzzeitdauer (tᵢₙⱼ) jeweils durchgeführt werden.

6. Verfahren nach einem der vorangehenden Ansprüche, **dadurch gekennzeichnet, dass** die Anzeige aus einer Betätigung eines Warnlichts (35) oder dergleichen besteht.

7. Anordnung zur Diagnose eines Sensors (27) im Zusammenhang mit der Regelung eines Verbrennungsmotors (1), die eine Pumpe (8; 12) zum Zuführen von Kraftstoff unter Druck (p) zu dem Motor (1) und eine Regelungseinrichtung (5, 6, 14, 17, 24, 25) zur Regelung eines Luft/Kraftstoff-Gemischs, welches entsprechend dem Betriebszustand des Motors (1) angepasst ist, aufweist, **dadurch gekennzeichnet, dass** durch die Regelungseinrichtung (5, 6, 14, 17, 24, 25) eine Durchführung einer beabsichtigten Modifikation des Druckes (p) und einer beabsichtigten Modifikation der Einspritzzeitdauer, während der Kraftstoff dem Motor (1) zugeführt wird, durchführbar ist, wobei die Modifikation des Drucks (p) und der Einspritzzeitdauer (tᵢₙⱼ) jeweils derart ausgewählt sind, dass im wesentlichen keine Änderung der Kraftstoffströmung (F) zu dem Motor (1) vorliegt, und dass durch die Regelungseinrichtung (5, 6, 14, 17, 24, 25) prüfbar ist, ob die jeweilige Modifikation des Druckes (p) und der Einspritzzeitdauer (tᵢₙⱼ) zu irgendeiner unerlaubten Abweichung bei dem Betriebszustand des Motors (1) führt und, wenn dies der Fall ist, eine Anzeige, dass der Sensor (27) defekt ist, abgebbar ist.

8. Anordnung nach Anspruch 7, **dadurch gekennzeichnet, dass** der Motor (1) ein Direkteinspritz-Ottomotor ist.

9. Anordnung nach Anspruch 7 oder 8, **dadurch gekennzeichnet, dass** die Pumpe (18, 12) eine Hochdruckpumpe (12) zum Zuführen des Kraftstoffs zu dem Motor (1) aufweist, wobei der Sensor (27) stromabwärts der Hochdruckpumpe (12) angeordnet ist.

10. Fahrzeug mit einer Anordnung gemäß einem der Ansprüche 7 bis 9.

## Revendications

1. Procédé pour établir le diagnostic d'un capteur (27) en liaison avec une commande d'un moteur à combustion (1), de sorte que la commande comporte les étapes consistant à :
délivrer du carburant sous pression (p) au moteur (1),
détecter ladite pression (p) par l'intermédiaire dudit capteur (27), et
commander un mélange air/carburant, adapté en fonction de l'état de fonctionnement du moteur (1),
**caractérisé en ce que** ledit procédé comporte les étapes consistant à :
effectuer une modification intentionnelle de ladite pression (p),
effectuer une modification intentionnelle de la période de temps d'injection (tᵢₙⱼ) pendant laquelle du carburant est délivré au moteur (1), lesdites modifications de la pression (p) et de la période de temps d'injection (tᵢₙⱼ), respectivement, étant sélectionnées de telle sorte que pratiquement aucun changement dans l'écoulement de carburant (F) jusqu'au moteur (1) n'est obtenu, et
effectuer un contrôle pour déterminer si ladite modification de la pression (p) et ladite modification de la période de temps d'injection (tᵢₙⱼ), respectivement, entraînent une déviation inadmissible quelconque dans l'état de fonctionnement du moteur (1) et, si tel est le cas,
délivrer une indication sur le fait que le capteur (27) est défectueux.

2. Procédé selon la revendication 1, **caractérisé en ce que** ledit contrôle comporte une étape consistant à déterminer si ladite modification de la pression (p) et ladite modification de la période de temps d'injection (tᵢₙⱼ), respectivement, entraînent une déviation inadmissible quelconque dans ladite commande du mélange air/carburant délivré au moteur (1).

3. Procédé selon les revendications 1 ou 2, **caractérisé en ce qu'**il comporte un contrôle pour déterminer si le signal provenant du capteur (27) se situe dans une plage délimitée par une valeur de mesure concevable maximale et une valeur de mesure concevable minimale, tout signal situé en dehors de ladite plage étant utilisé pour ladite indication que le capteur (27) est défectueux.

4. Procédé selon l'une quelconque des revendications précédentes, **caractérisé en ce qu'**il comporte un contrôle pour déterminer si un mode de fonctionnement adapté du moteur (1) existe avant d'effectuer ladite modification intentionnelle de la pression (p) et de la période de temps d'injection (tᵢₙⱼ), respectivement.

5. Procédé selon la revendication 4, **caractérisé en ce qu'**il comporte un contrôle pour déterminer si la valeur Lambda relative à la teneur en oxygène des gaz d'échappement provenant du moteur (1) est de l'ordre de λ = 1 avant d'effectuer ladite modification intentionnelle de la pression (p) et de la période de temps d'injection (tᵢₙⱼ), respectivement.

6. Procédé selon l'une quelconque des revendications précédentes, **caractérisé en ce que** ladite indication consiste en l'actionnement d'un voyant d'avertissement (35) ou similaire.

7. Agencement pour établir le diagnostic d'un capteur (27) en liaison avec une commande d'un moteur à combustion (1), comportant une pompe (8 ; 12) pour délivrer du carburant sous pression (p) au moteur (1) et des moyens de commande (5, 6, 14, 17, 24, 25) pour commander un mélange air/carburant adapté en fonction de l'état de fonctionnement du moteur (1), **caractérisé en ce que** lesdits moyens de commande (5, 6, 14, 17, 24, 25) sont opérationnels pour effectuer une modification intentionnelle de ladite pression (p), et une modification intentionnelle de la période de temps d'injection (tᵢₙⱼ) pendant laquelle du carburant est délivré au moteur (1), lesdites modifications de la pression (p) et de la période de temps d'injection (tᵢₙⱼ), respectivement, étant sélectionnées de telle sorte que pratiquement aucun changement dans l'écoulement de carburant (F) jusqu'au moteur (1) n'est obtenu, et **en ce que** lesdits moyens de commande (5, 6, 14, 17, 24, 25) sont opérationnels pour vérifier si ladite modification de la pression (p) et ladite modification de la période de temps d'injection (tᵢₙⱼ), respectivement, entraînent une déviation inadmissible quelconque dans l'état de fonctionnement du moteur (1), et, si tel est le cas, pour délivrer une indication sur le fait que le capteur (27) est défectueux.

8. Agencement selon la revendication 7, **caractérisé en ce que** ledit moteur (1) est un moteur de type Otto à injection directe.

9. Agencement selon les revendications 7 ou 8, **caractérisé en ce que** ladite pompe (8 ; 12) comporte une pompe à haute pression (12) pour délivrer le carburant audit moteur (1), ledit capteur (27) étant agencé en aval de la pompe à haute pression (12).

10. Véhicule comportant un agencement selon l'une quelconque des revendications 7 à 9.
